# EUROPÄISCHE PATENTSCHRIFT

(11) **EP 2 202 498 B1**
(45) Veröffentlichungstag und Bekanntmachung des Hinweises auf die Patenterteilung: **08.07.2015**
(21) Anmeldenummer: 09015730.6
(22) Anmeldetag: 18.12.2009
(51) Int. Cl.: G01G 23/10

(54) **Einrichtung zur Erschütterungskompensation des Gewichtssignals eines Wägesensors**
Device for compensating for vibration of the load signal of a scale sensor
Dispositif de compensation de choc du signal de poids d'un capteur de pesée

(30) Priorität: 23.12.2008 DE 102008062972
(43) Veröffentlichungstag der Anmeldung: 30.06.2010
(73) Patentinhaber: Wipotec Wiege- und Positioniersysteme GmbH, 67657 Kaiserslautern (DE)
(72) Erfinder: Gottfriedsen, Jan, 67714 Waldfischbach-Burgalben (DE); Schulzki, Alexander, 67705 Stelzenberg (DE)
(74) Vertreter: Eder, Thomas

(56) Entgegenhaltungen:
- EP-A1- 0 622 617
- EP-A1- 0 656 530
- EP-A2- 0 756 158
- JP-A- 7 167 705

## Beschreibung

Die Erfindung betrifft eine Einrichtung zur Erschütterungskompensation des Gewichtssignals eines Wägesensors mit den Merkmalen des Oberbegriffs des Patentanspruchs 1 sowie eine Wägeeinrichtung mit einer derartigen Einrichtung zur Erschütterungskompensation. Um die Anzahl von Wägevorgängen pro Zeitintervall möglichst hoch zu halten, ist es bei herkömmlichen Wägevorrichtungen bekannt, das Messsignal nur mit einem Tiefpassfilter mit relativ hoher Grenzfrequenz zu beaufschlagen. Hierdurch ergibt sich die gewünschte geringe Einschwingzeit für das gefilterte Messsignal. Wirken also zusätzlich zur zu erfassenden Last Störbeschleunigungen auf den Wägesensor, beispielsweise in Form von relativ hochfrequenten Vibrationen, so können derartige Störungen des Messsignals mittels des Tiefpassfilters am Ausgang der Wägeeinrichtung eliminiert werden.

Zudem besteht die Möglichkeit, dass auf den Wägesensor nicht nur relativ hochfrequente, sondern auch niederfrequente Störbeschleunigungen einwirken. Entsprechend niederfrequente Störbeschleunigungen lassen sich mit einem üblichen Tiefpassfilter kaum mehr eliminieren, da in diesem Fall die Grenzfrequenz des Tiefpassfilters derart gering gewählt werden müsste, dass die Einschwingzeit nicht mehr in einem akzeptablen Bereich liegt.

Es ist daher üblich, Beschleunigungen als eine wesentliche Störquelle bei der Gewichtsmessung durch geeignete Beschleunigungssensoren zu erfassen und mit geeigneten Methoden zu kompensieren. Das Signal des Beschleunigungssensors dient dabei zur Korrektur des noch mit der Störgröße beaufschlagten Messsignals. Vorrangig werden bei derartigen bekannten Wägeeinrichtungen die Beschleunigungssensoren baugleich wie die eigentlichen Wägesensoren aufgebaut und auch identisch in der unmittelbaren Umgebung der Wägesensoren ausgerichtet. Häufig werden die Beschleunigungssensoren dabei mit der selben Vorlast beaufschlagt, wie die Wägesensoren, wobei im Fall des Wägesensors die Vorlast beispielsweise aus einer Wägeschale oder der Fördereinrichtung eines Wägeförderers bestehen kann.

Mit diesen Maßnahmen wird für den Beschleunigungssensor in Bezug auf die (mechanischen) Störsignale annähernd dasselbe dynamische Verhalten erreicht, das der Wägesensor in Bezug auf die Störsignale aufweist. Um auch die auf den Wägesensor wirkende eigentliche Lastkraft zu berücksichtigen, wird die Verstärkung des Störgrößensignals in Abhängigkeit von der Lastkraft bzw. von der auf den Wägesensor aufgelegten Masse nachgeführt.

Kompensationsverfahren bzw. Wägeeinrichtungen mit Erschütterungskompensation, wobei Dummy-Wägezellen als Beschleunigungssensoren verwendet sind, die eine zu den Wägesensoren identische Struktur aufweisen, sind beispielsweise aus der EP 0 662 617 A1 und der hierfür prioritätsbegründenden JP 7 167705 A bekannt. Die von Dummy-Wägezellen erzeugten Signale werden im Rahmen eines rekursiven Verfahrens verarbeitet und zur Korrektur der von den Wägesensoren gelieferten Signalen verwendet.

Ist der Wägesensor nicht mehr baugleich mit dem Beschleunigungssensor, so ist es bekannt, mit einer analogen Signalverarbeitung ein starres Abbildfilter zu realisieren, welches das Systemverhalten des eigentlichen Wägesensors nachbildet. Das Systemverhalten wird dabei beeinflusst durch das dynamische Verhalten der mechanischen Komponenten des Wägesensors. Neben dem durch die mechanischen Komponenten bedingten Systemverhalten beeinflussen bei bestimmten Wägesensoren auch elektromechanische Komponenten das Systemverhalten. Beispielsweise spielt diesbezüglich bei einem Wägesensor nach dem Prinzip der elektrodynamischen Kraftkompensation der Positionsregler eine entscheidende Rolle. An dieser Stelle sei darauf hingewiesen, dass in der vorliegenden Beschreibung unter einem Wägesensor ein beliebiger Kraftaufnehmer verstanden wird, der zum Zweck des Wiegens eines beliebigen Guts einsetzbar ist.

Ein Problem bei diesem Stand der Technik ist jeweils, dass das dynamische Verhalten des Wägesensors von der aufgelegten Masse, das heißt von der Lastkraft abhängt und daher bei veränderlicher Masse bzw. variierender Lastkraft das Abbildfilter nicht mehr optimal angepasst ist. Beispielsweise sinken bei üblichen Wägesensoren mit zunehmender Lastkraft die Eigenresonanzen des Wägesensors. Eine Lösungsmöglichkeit wäre es in diesem Fall, den Wägesensor entsprechend groß und steif mit sehr hohen Eigenresonanzen zu bauen. Dies steht jedoch mit der häufig eine große Rolle spielenden Forderung nach geringer Bauform und hoher messtechnischer Empfindlichkeit im Widerspruch.

Der Erfindung liegt daher die Aufgabe zugrunde, eine Einrichtung zur Erschütterungskompensation des Gewichtssignals eines Wägesensors zu schaffen, die auch im Fall der Verwendung von Beschleunigungssensoren, die nicht identisch mit der eigentlichen Messzelle bzw. dem Wägesensor aufgebaut sind, eine hohe Messgenauigkeit zu gewährleisten, auch wenn die auf den Wägesensor wirkende Lastkraft einen großen Bereich abdeckt. Des Weiteren liegt der Erfindung die Aufgabe zugrunde, eine Wägeeinrichtung mit einer derartigen Einrichtung zur Erschütterungskompensation zu realisieren.

Die Erfindung löst diese Aufgabe mit den Merkmalen der Patentansprüche 1 bzw. 15.

Die Erfindung geht von der Erkenntnis aus, dass durch den Einsatz eines adaptiven digitalen Filters im Signalpfad für die Ermittlung der Störgröße der Frequenzgang des digitalen Filters in Abhängigkeit vom Ausgangssignal der Wägeeinrichtung bzw. der Einrichtung zur Erschütterungskompensation der gesamte Frequenzgang des Kompensationssignalzweigs (einschließlich des Beschleunigungssensors) für die betreffende Störgröße (rein translatorische Beschleunigung in einer definierten Richtung oder rein rotatorische Winkelbeschleunigung um eine definierte Achse) an den Frequenzgang der im Wägesignalzweig befindlichen Komponenten, insbesondere den lastkraftabhängigen Frequenzgang des verwendeten Wägesensors (in Bezug auf dieselbe Störgröße), angepasst werden kann. Durch eine geeignete digitale Signalverarbeitung kann somit die jeweilige Störgröße, d.h. die Beschleunigung in einer vorgegebenen translatorischen Richtung oder die Winkelbeschleunigung um eine vorgegebene Achse, ermittelt und von dem noch mit dieser Störgröße behafteten Messsignal subtrahiert werden.

Damit kann mittels jeweils eines Kompensationssignalzweigs die Auswirkung einer Störbeschleunigung in jeweils einem definierten Freiheitsgrad durch die Erzeugung eines entsprechenden Störgrößensignals berücksichtigt werden. Die ggf. mehreren Störgrößensignale werden dann von dem noch gestörten Messsignal subtrahiert. In jedem der einzelnen Kompensationssignalzweige kann durch die entsprechende Nachbildung des Frequenzgangs des Wägesignalzweigs in Bezug auf die jeweilige Störgröße die von der auf den Wägesensor wirkenden Gesamtlast abhängige Störgröße korrekt ermittelt und berücksichtigt werden.

Die adaptive digitale Filtereinheit kann nach einer Ausführungsform der Erfindung aus dem eigentlichen digitalen Filter bestehen, welches eine vorgegebene Anzahl von Filterparametern aufweist, sowie aus einer Filterparameter-Ermittlungseinheit, welcher die Führungsgröße zugeführt ist und welche abhängig von dem ihr zugeführten Führungssignal die Filterparameter der Filtereinheit ermittelt und an das digitale Filter übergibt. Die Führungsgröße kann dabei das Ausgangssignal der Additionseinheit sein, mit welcher das noch störgrößenbehaftete Messsignal und die ggf. mehreren jeweils mit einem negativen Vorzeichen beaufschlagten Kompensationssignale der Kompensationssignalzweige addiert werden. An Stelle der unmittelbaren Verwendung dieses addierten Signals kann auch das mit einem Tiefpassfilter gefilterte Ausgangssignal der Additionseinheit verwendet werden. Schließlich ist es auch möglich, das noch störgrößenbehafte digitale Messsignal als Führungssignal zu verwenden.

Die Filterparameter-Ermittlungseinheit kann dabei die Filterparameter aus einer oder mehreren funktionalen analytischen Abhängigkeiten aus dem Führungssignal berechnen.

Nach einer anderen Ausführungsform der Erfindung kann die Filterparameter-Ermittlungseinheit die Filterparameter aus einer oder mehreren gespeicherten Tabellen ermitteln, in welcher die Filterparameter als Parametersätze in Abhängigkeit von Werten für das Führungssignal oder in Abhängigkeit von Wertebereichen für das Führungssignal gespeichert sind.

In jedem Fall kann das Ermitteln der Filterparameter abhängig von der Führungsgröße und das Zuführen der ermittelten Filterparameter an das digitale Filter (und damit der gesamte Vorgang der Erschütterungskompensation) als geschlossene Regelschleife realisiert sein.

Das digitale Filter kann zur Erleichterung der Auslegung des gesamten Filters in wenigstens ein erstes digitales Teilfilter, dessen Filterparameter in Abhängigkeit von der Führungsgröße adaptiv ermittelt werden, und in wenigstens ein zweites digitales Teilfilter aufgeteilt sein, dessen Filterparameter unabhängig von der Führungsgröße konstant gehalten werden. Dabei kann mittels des jeweils zweiten digitalen Teilfilters in einem Kompensationssignalzweig derjenige Anteil des Frequenzgangs des Wägesignalzweigs berücksichtigt werden, der von der auf den Wägesensor wirkenden Lastkraft unabhängig ist. Selbstverständlich schließt dieser Anteil auch denjenigen Anteil des Frequenzgangs des Wägesignalzweigs ein, der vollständig von einer Beschleunigungsstörgröße, die auf den Wägesensor wirkt, unabhängig ist. Hierbei kann es sich beispielsweise um den Frequenzgang von elektronischen Komponenten, beispielsweise digitalen oder analogen Filtern, handeln.

Die Filterparameter des wenigstens einen zweiten digitalen Teilfilters können in einem Kalibriervorgang abhängig von den Charakteristika des Wägezweigs ermittelt werden, die von der auf den Wägesensor wirkenden Lastkraft unabhängig sind. Die Ermittlung kann unter Verwendung einer übergeordneten Steuereinheit erfolgen oder auch mittels der Filterparameter-Ermittlungseinheit, die hierzu in einen Kalibriermodus überführbar sein kann.

Werden mehrere Störgrößen, beispielsweise für unterschiedliche Beschleunigungsfreiheitsgrade, ermittelt, so können die wenigstens einen zweiten digitalen Teilfilter in den verschiedenen Kompensationssignalzweigen identisch ausgebildet sein, das heißt eine identische Filterstruktur aufweisen und mit denselben Filterparametern arbeiten.

In diesem Fall kann die Struktur der gesamten Kompensationseinrichtung dann auch so gewählt werden, dass die Kompensationszweige einen gemeinsamen Teilzweig aufweisen, in welchem ein zweites digitales Teilfilter liegt, welches für sämtliche Kompensationssignalzweige den nicht von der Lastkraft abhängigen Teil des Frequenzgangs des Wägesignalzweigs nachbildet.

Nach einer Ausführungsform der Erfindung kann das digitale Filter und damit auch jedes der wenigstens einen bzw. zweiten digitalen Teilfilters in mehrere Filter zweiter Ordnung aufgeteilt sein oder aus jeweils einem Filter zweiter Ordnung bestehen. Hierdurch wird die Auslegung der Filter erleichtert. Für diejenigen Teilfilter zweiter Ordnung, die als adaptive Teilfilter ausgebildet sind, ergibt sich eine einfachere funktionale Abhängigkeit der Filterparameter von der Führungsgröße.

Jede Filtereinheit in einem Kompensationssignalzweig kann erfindungsgemäß eine digitale Verstärkereinheit umfassen, die als digitale Multiplikationseinheit ausgebildet ist. Die digitale Verstärkereinheit eines Kompensationssignalzweiges kann dabei jeweils vom ersten digitalen Teilfilter umfasst sein. Denn hierbei handelt es sich lediglich um einen konstanten Multiplikationsfaktor vor der Filterfunktion.

Der Verstärkungsfaktor der digitalen Verstärkereinheit kann dabei auch adaptiv in Abhängigkeit von der Führungsgröße ermittelt werden.

Ist lediglich ein einziger Kompensationszweig vorgesehen, so kann erfindungsgemäß das adaptive digitale Filter auch im Wägezweig vorgesehen sein, wobei auch in diesem Fall (analog der vorhergehenden Beschreibung) der Frequenzgang des Wägezweigs einschließlich des Wägesensors an den Frequenzgang des Kompensationszweigs einschließlich des Beschleunigungssensors angepasst wird.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: ein schematisches Blockdiagramm der Signalverarbeitungskomponenten einer im Übrigen nicht näher dargestellten Wägeeinrichtung mit einer ersten Ausführungsform einer Einrichtung zur Erschütterungskompensation mit einem einzigen Störgrößensensor;
- Fig. 2: eine Darstellung ähnlich Fig. 1 einer weiteren Ausführungsform einer Wägeeinrichtung mit einer Einrichtung zur Erschütterungskompensation, welche zwei Störgrößensensoren aufweist, und
- Fig. 3: eine Darstellung ähnlich Fig. 2 einer weiteren Ausführungsform einer Wägeeinrichtung mit einer Einrichtung zur Erschütterungskompensation, welche zwei Störgrößensensoren aufweist, deren Signale zur Berechnung einer anderen Störgröße und/oder zur Berechnung des Einflusses der jeweiligen Störgröße am Ort des Wägesensors verknüpft werden.

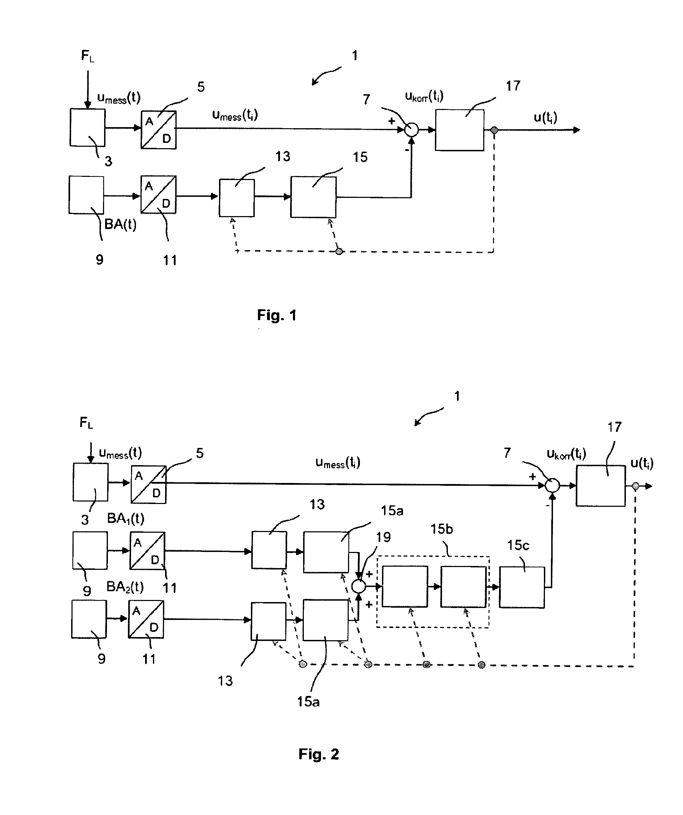

Fig. 1 zeigt eine Wägeeinrichtung 1, von der lediglich die für das Verständnis der vorliegenden Erfindung relevanten Komponenten in einem schematischen Blockdiagramm dargestellt sind. Die Wägeeinrichtung 1 umfasst einen Wägesensor 3, der mit einer Lastkraft F_{L} beaufschlagt ist, die von einer zu wiegenden Masse m_{L} auf einen Lastaufnehmer des Wägesensors 3 ausgeübt wird. Der Wägesensor kann nach dem Prinzip der elektromagnetischen Kraftkompensation oder nach jedem möglichen anderen physikalischen Prinzip zur Erfassung der Gewichtskraft einer zu wiegenden Masse m_{L} funktionieren. Dabei ist es für die vorliegende Erfindung unerheblich, ob der Wägesensor 3 als selbstständige Wägezelle und beispielsweise mit einer Analog-/Digitalwandlereinheit 5 integriert ausgebildet ist, oder ob der Wägesensor 3 als separate, eigenständige Einheit vorliegt.

Das zunächst noch analoge Messsignal oder Wägesignal uₘₑₛₛ(t) des Wägesensors 3 ist dem Wandlereingang der Analog-/Digitalwandlereinheit 5 zugeführt, die an ihrem Ausgang ein digitales Wägesignal uₘₑₛₛ(tᵢ) erzeugt, wobei die digitalisierten Abtastwerte des digitalen Messignals uₘₑₛₛ(tᵢ) mit U_{mess,i} bezeichnet sind. Das digitalisierte Messsignal ist einer Additionseinheit 7 zugeführt.

Die Wägeeinrichtung 1 umfasst des Weiteren einen Beschleunigungssensor 9 zur Erfassung einer Beschleunigungsstörgröße in einer vorgegebenen translatorischen Richtung oder um eine vorgegebene rotatorische Achse. Beispielsweise kann der Beschleunigungssensor 9 nur auf Beschleunigungen reagieren, die in Richtung der Einleitung der Lastkraft F_{L} auf den Wägesensor, das heißt in vertikaler Richtung, wirken. Derartige Beschleunigungen beeinflussen selbstverständlich auch das analoge Messsignal uₘₑₛₛ(t) bzw. das digitalisierte Signal uₘₑₛₛ(tᵢ).

Das analoge Ausgangssignal BA(t) des Beschleunigungssensors 9 ist einer weiteren Analog-/Digitalwandlereinheit 11 zugeführt, die das analoge Störgrößensignal BA(t) abtastet und in ein digitalisiertes Signal BA(tᵢ) umsetzt. Die Abtastzeitpunkte der beiden Analog-/Digitalwandlereinheiten 5 bzw. 11 sind dabei vorzugsweise möglichst zeitgleich gewählt, um eine spätere Kompensation einer entsprechenden Phasenverschiebung zu vermeiden. Die Abtastung erfolgt in beiden Fällen in äquidistanten Zeitabschnitten.

Das digitalisierte Ausgangssignal bzw. die betreffenden Abtastwerte BA(tᵢ) des digitalisierten Störgrößensignals werden zunächst einer digitalen Verstärkereinheit 13 zugeführt, wobei diese als einfache digitale Multiplikatoreinheit ausgebildet sein kann.

Das so verstärkte digitalisierte Störgrößensignal wird einer digitalen Filtereinheit 15 zugeführt. Die digitale Filtereinheit 15 kann als eigenständige Signalverarbeitungseinheit realisiert sein oder durch eine Mikrocontrollereinheit, die eine entsprechende Filtersoftware umfasst. Das digitale Ausgangssignal der Filtereinheit 15 wird mit einem negativen Vorzeichen beaufschlagt und als Korrektursignal bzw. Kompensationssignal der Additionseinheit 7 zugeführt. Auf diese Weise wird von den digitalisierten Werten U_{mess,i} des noch mit der Störgröße beaufschlagten Wägesignals uₘₑₛₛ(tᵢ) jeweils der betreffende verstärkte (d.h. mit einem vorgegebenen Faktor multiplizierte) Wert des digital gefilterten Störgrößensignals BAᵢ subtrahiert, so dass am Ausgang der Additionseinheit 7 das korrigierte bzw. kompensierte Wägesignal uₖₒᵣᵣ(tᵢ) vorliegt. Dieses korrigierte digitale Signal uₖₒᵣᵣ(tᵢ) wird einer Tiefpassfiltereinheit 17 zugeführt, die beispielsweise durch die Bildung eines gleitenden Mittelwerts realisiert sein kann. Am Ausgang der Wägeeinrichtung 1 liegt dann das korrigierte und tiefpassgefilterte digitale Wägesignal u(tᵢ) vor.

Um ein jeweils in Betrag und Phase korrektes digitales Störgrößensignal zu erzeugen, welches mit dem negativen Vorzeichen beaufschlagt der Additionseinheit 7 zugeführt wird, ist es erforderlich, dass der Frequenzgang des Kompensationssignalzweigs (in Bezug auf die betreffende mechanische Beschleunigungsstörgröße) einschließlich des damit verbundenen Beschleunigungssensors möglichst identisch ist mit dem Frequenzgang des Wägesignalzweigs einschließlich des Wägesensors (in Bezug auf dieselbe mechanische Beschleunigungsstörgröße) oder diesen zumindest mit einer ausreichenden (vorgegebenen) Genauigkeit annähert. Der Kompensationssignalzweig umfasst dabei die Analog-/Digitalwandlereinheit 11, die digitale Verstärkereinheit 13 und die digitale Filtereinheit 15, während der Wägesignalzweig die Analog-/Digitalwandlereinheit 5 umfasst.

Werden für den Wägesensor 3 und den Beschleunigungssensor 9 jeweils baugleiche Sensoren mit identischen Eigenschaften verwendet, so könnten, wie im Stand der Technik bekannt, die digitale Verstärkereinheit 13 und die digitale Filtereinheit 15 zumindest dann entfallen, wenn auf beide Sensoren jeweils die selbe Lastkraft F_{L} wirkt. Da dies jedoch kaum realisierbar ist, muss eine Korrektur des erfassten Messsignals uₘₑₛₛ(t) bzw. uₘₑₛₛ(tᵢ) bereits aus diesem Grund erfolgen, da der Frequenzgang des Wägesensors 3 und damit der gesamte Frequenzgang des Wägesignalzweigs einschließlich des Wägesensors regelmäßig von der Lastkraft F_{L} abhängt.

Werden nicht baugleiche Sensoren für den Wägesensor 3 und den Beschleunigungssensor 9 verwendet, so müssen im Kompensationszweig nicht nur der Einfluss der unterschiedlichen Lastkräfte auf den Frequenzgang des Wägesensors, sondern auch die unterschiedlichen Eigenschaften, d.h. generell unterschiedliche Frequenzgänge der Sensoren und ggf. der in den Zweigen unterschiedlich ausgebildeten elektronischen Signalverarbeitungskomponenten kompensiert werden.

Zur Kompensation der lastkraftabhängigen Veränderung des Frequenzgangs des Wägesensors wird der digitalen Filtereinheit 15 und erforderlichenfalls auch der digitalen Verstärkereinheit 13 das Ausgangssignal u(tᵢ) der Wägeeinrichtung zugeführt. Auf diese Weise können die Filtereinheit 15 bzw. die digitale Verstärkereinheit 13 jeweils die Filterparameter bzw. den Verstärkungsfaktor so in Abhängigkeit vom Ausgangssignal u(tᵢ) festlegen, dass für die momentan auf den Wägesensor 3 wirkende Lastkraft F_{L} der Frequenzgang des Wägesignalzweigs einschließlich des Frequenzgangs des Wägesensors mit dem Frequenzgang des Kompensationssignalzweigs einschließlich des Frequenzgangs des Beschleunigungssensors (in Bezug auf die vorbestimmte Beschleunigungsstörgröße) übereinstimmt.

Die Filtereinheit 15 kann dabei, wie bereits vorstehend erläutert, auch die Funktion der digitalen Verstärkereinheit 13 übernehmen. Die digitale Filtereinheit 15 kann aus dem eigentlichen digitalen Filter sowie einer Filterparameter-Ermittlungseinheit bestehen, welcher das Ausgangssignal u(tᵢ) als Führungsgröße zugeführt ist. Die Filterparameter-Ermittlungseinheit kann dabei auch den konstanten Multiplikationsfaktor ermitteln, welcher die digitale Verstärkereinheit 13 realisiert.

Zur Ermittlung der Filterparameter kann die Filterparameter-Ermittlungseinheit über funktionale Abhängigkeiten verfügen, welche jeweils einen Filterparameter in Abhängigkeit von der Führungsgröße darstellen. Selbstverständlich können die Filterparameter jedoch auch aus gespeicherten Tabellen ermittelt werden, in welchen die Filterparameter als Parametersätze in Abhängigkeit von Werten für die Führungsgröße oder in Abhängigkeiten von Wertbereichen für die Führungsgröße gespeichert sind. Das Bestimmen der Filterparameter kann generell empirisch, beispielsweise in einem Kalibriermodus der Filtereinheit bzw. der Filterparamter-Ermittlungseinheit und/oder rein rechnerisch (beispielsweise durch Simulation) erfolgen.

Selbstverständlich kann der digitalen Filtereinheit 15 bzw. der digitalen Verstärkereinheit 13 anstelle des Ausgangssignals u(tᵢ) der Wägeeinrichtung 1 auch das nicht tiefpassgefilterte Ausgangssignal uₖₒᵣᵣ(tᵢ) der Additionseinheit 7 oder auch das noch störgrößenbehaftete digitale Messsignal uₘₑₛₛ(tᵢ) als Führungssignal zugeführt werden.

Damit kann durch die Verwendung einer adaptiven digitalen Filtereinheit 15 und ggf. zusätzlich durch die adaptive digitale Verstärkereinheit 13 der Einfluss von Frequenzgangveränderungen durch unterschiedliche Lastkräfte F_{L}, die auf den Wägesensor 3 wirken, kompensiert werden.

Um eine möglichst genaue Korrektur zur erreichen, wird man den Beschleunigungssensor 9 möglichst nahe am Wägesensor positionieren oder diesen sogar in den Wägesensor integrieren. Kann dies nicht gewährleistet werden, so kann die Tatsache, dass die am Ort des Beschleunigungssensors 9 erfasste Beschleunigungsstörgröße am Ort des Wägesensors einen anderen Wert aufweisen kann, in einer entsprechenden Ortsabhängigkeit berücksichtigt werden. Diese kann ebenfalls in der Filtereinheit 15 bzw. der Verstärkereinheit 13 bei der Berechnung der Filterkoeffizienten bzw. bei der Berechnung des Verstärkungsfaktors berücksichtigt werden.

Während bei der Ausführungsform nach Fig. 1 nur eine einzige Beschleunigungsstörgröße korrigiert wird (d.h. es wird nur der Einfluss einer Komponente von beliebigen Beschleunigungen in einer definierten translatorischen Richtung oder um eine Achse korrigiert), zeigt Fig. 2 eine weitere Ausführungsform einer Wägeeinrichtung 10, welche zwei Beschleunigungssensoren 9 zur Korrektur von zwei gleichen oder unterschiedlichen Beschleunigungsgrößen umfasst. Auch hierbei sei zunächst davon ausgegangen, dass die Beschleunigungssensoren möglichst nah am Ort des Wägesensors angeordnet sind, so dass eine Korrektur der Ortsabhängigkeit (wie z.B. in der DE 10 2005 018 708 B4 der Anmelderin beschrieben) nicht erfolgen muss.

Von den Beschleunigungssensoren 9 kann beispielsweise ein erster Beschleunigungssensor die Beschleunigung in Lasteinleitungsrichtung der auf den Wägesensor wirkenden Lastkraft F_{L} erfassen, während der zweite Beschleunigungssensor die Winkelbeschleunigung um eine Achse erfasst, die senkrecht zur Lasteinleitungsrichtung und senkrecht zu einer Achse eines Lastarms verläuft (beispielsweise senkrecht zur Ebene, in welcher die Parallelogrammlenker einer Wägezelle liegen, die nach dem Prinzip der elektromagnetischen Kraftkompensation funktioniert).

Die Ausführungsform nach Fig. 2 weist somit zwei Kompensationssignalzweige auf, die jeweils eine Analog-/Digitalwandlereinheit 11 umfassen, welcher jeweils das analoge Messsignal bzw. Störgrößensignal BA₁(t), BA₂(t) der Beschleunigungssensoren 9 zugeführt ist. Weiterhin umfasst jeder Kompensationssignalzweig wiederum jeweils eine digitale Verstärkereinheit 13, welcher das digitalisierte Störgrößensignal BA₁(tᵢ) und BA₂(tᵢ) der betreffenden Analog-/Digitalwandlereinheit zugeführt ist. Das verstärkte digitale Störgrößensignal BA₁(tᵢ) und BA₂(tᵢ) wird jeweils einer digitalen Filtereinheit 15a zugeführt, welche wiederum adaptiv ausgebildet ist. Hierzu wird jeder digitalen Filtereinheit das digitale Ausgangssignal u(tᵢ) der Einrichtung 1 zugeführt. Jede digitale Filtereinheit 15a berücksichtigt die jeweils unterschiedlichen Einflüsse der Lastkraft F_{L} auf den Frequenzgang der Beschleunigungssensoren 9 in Bezug auf die jeweils unterschiedliche Störgröße. Anschließend werden die digital adaptiv gefilterten Ausgangssignale der digitalen Filtereinheiten 15a mittels einer Additionseinheit 19 addiert und das addierte digitale Signal einer weiteren digitalen Filtereinheit 15b zugeführt, die ebenfalls adaptiv ausgebildet ist. Da die digitale Filtereinheit 15b infolge der Addition von jedem der beiden Kompensationssignalzweige umfasst ist (statt dessen könnte die Filtereinheit 15b doppelt vorhanden und jeweils in jedem der beiden Zweige vor dem Additionspunkt vorgesehen sein), kann sie zur Berücksichtigung von Einflüssen dienen, die in jedem der beiden Zweige auftreten, beispielsweise zur Berücksichtigung einer Lastabhängigkeit des Frequenzgangs, die beiden Beschleunigungssensoren gemeinsam ist.

Das Ausgangssignal der digitalen Filtereinheit 15b wird einer weiteren digitalen Filtereinheit 15c zugeführt, die als einfache, nicht-adaptive Filtereinheit ausgebildet ist. Diese ist ebenfalls jedem der beiden Kompensationszweige zugeordnet und kann Einflüsse berücksichtigen, die in jedem Zweig in identischer Weise auftreten, beispielsweise die Anpassung eines nicht-lastabhängigen Unterschieds des Frequenzgangs der Beschleunigungssensoren 9 gegenüber dem Frequenzgang des Wägesensors 3 oder einen in beiden Zweigen vorhandenen Frequenzgangunterschied, der durch weitere elektronische Komponenten verursacht ist (analoge Verstärker etc.).

Das so ermittelte digitale Korrektursignal wird dann wiederum mit einem negativen Vorzeichen beaufschlagt und zum digitalisierten Messsignal mittels der Additionseinheit 7 addiert.

Wie bereits vorstehend kurz erläutert können die beiden Kompensationssignalzweige selbstverständlich auch vollkommen unabhängig voneinander ausgebildet sein und jeweils eine Analog-/Digitalwandlereinheit 11, eine digitale Verstärkereinheit 13 und digitale Filtereinheiten 15a, 15b und 15c umfassen, wobei dann zwei separate Kompensationssignale im Additionspunkt, der von der Additionseinheit 7 gebildet ist, vom digitalen Messsignal uₘₑₛₛ(tᵢ) subtrahiert werden. Dies bedeutet jedoch einen erhöhten Aufwand, da der zusätzliche Additionspunkt 19 weit weniger ins Gewicht fällt als eine Verdopplung der digitalen Filtereinheiten 15b und 15c.

Die adaptiv ausgebildeten Filtereinheiten 15a und 15b können selbstverständlich jeweils so ausgebildet sein, wie dies zuvor im Zusammenhang mit Fig. 1 erläutert wurde. Es kann jedoch auch eine gemeinsame Filterparameter-Ermittlungseinheit für die beiden in den noch getrennten Teilzweigen der Kompensationssignalzweige liegenden Filtereinheiten 15a vorgesehen sein, oder eine zentrale Filterparameter-Ermittlungseinheit, die für sämtliche adaptiv ausgebildeten digitalen Filtereinheiten 15a, 15b die Filterparameter bestimmt. Ebenso kann auch wiederum die digitale Verstärkereinheit 13 in jedem der Teilzweige in das jeweilige digitale Filter 15a integriert und ebenfalls adaptiv ausgebildet sein.

Die digitalen Filtereinheiten 15a, 15b können (ebenso wie die digitale Filtereinheit in Fig. 1) in jeweils kaskadierte Teilfiltereinheiten zweiter Ordnung aufgesplittet sein. Dies bietet den Vorteil einer einfacheren Dimensionierung der Filter und einer einfacheren Ermittlung der Filterparameter. Wie aus Fig. 2 ersichtlich, kann beispielsweise die Filtereinheit 15b in Form zweier kaskadierter Filtereinheiten zweiter Ordnung ausgebildet sein. Die Filtereinheit 15a in den beiden Teilzweigen kann selbstverständlich ebenfalls jeweils als ein oder mehrere kaskadierte Filtereinheiten zweiter Ordnung realisiert sein.

Das jeweilige Störgrößensignal (in einer translatorischen Richtung oder um eine rotatorische Achse) kann auch aus den Signalen von zwei oder mehreren Beschleunigungssensoren ermittelt werden, wie dies z.B. in der DE 10 2005 018 708 B4 der Anmelderin beschrieben ist. Beispielsweise kann aus den Signalen von zwei translatorischen Beschleunigungssensoren, die in einem bestimmten Abstand angeordnet sind, die Winkelbeschleunigung um eine Achse ermittelt werden, die senkrecht auf der Verbindungsstrecke der beiden Beschleunigungssensoren steht.

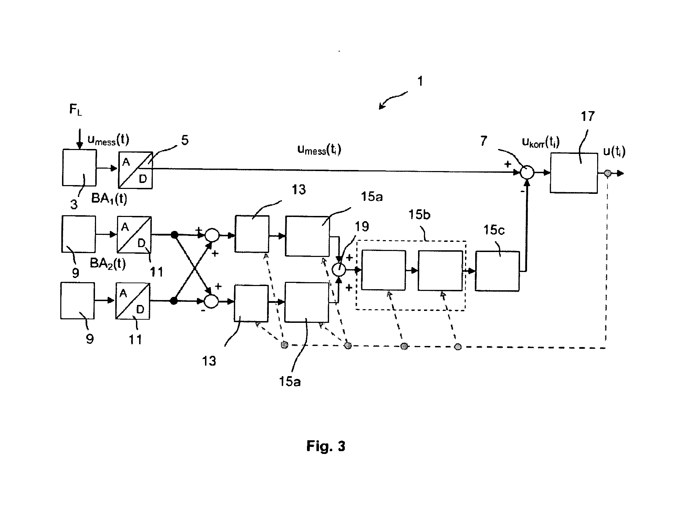

Fig. 3 zeigt eine weitere Variante ähnlich Fig. 2, wobei die eigentlichen Störsignale (in Bezug auf eine translatorische oder rotatorische Dimension) in den beiden Teilzweigen jeweils durch eine Verknüpfung der beiden digitalisierten Signale der Beschleunigungssensoren 9 ermittelt werden. Bei den Beschleunigungssensoren 9 in Fig. 3 kann es sich beispielsweise, wie in der DE 10 2005 018 708 B4 der Anmelderin beschrieben, um zwei Beschleunigungssensoren handeln, die in einer Linie mit dem Wägesensor 3 angeordnet sind und von diesem um jeweils eine vorgegebene Strecke beabstandet sind. Die Beschleunigungssensoren 9 können dabei wieder nur gegenüber Beschleunigungen empfindlich sein, die in Richtung der Lastkraft F_{L} wirken, das heißt sie erfassen nur diejenigen Komponenten von beliebigen Beschleunigungen, die in vertikaler Richtung verlaufen. Unter Verwendung der Geometriedaten kann dann durch eine Verknüpfung der digitalisierten Störgrößensignale BA₁(tᵢ) und BA₂(tᵢ) jeweils die am Ort des Wägesensors 3 wirkende rein translatorische Beschleunigung in Richtung der Lastkraft F_{L} und die am Ort des Wägesensors 3 wirkende rotatorische Beschleunigung (Winkelbeschleunigung) um eine Achse ermittelt werden, die auf der Lastkraft und auf der Verbindungslinie der Sensoren senkrecht steht und durch die Position des Wägesensors 3 verläuft.

Normalerweise müsste zur Ermittlung der digitalisierten Störsignale am Ort des Wägesensors jeweils eine mit vorgegebenen Faktoren gewichtete Addition der digitalisierten Störgrößensignale BA₁(tᵢ) beziehungsweise BA₂(tᵢ) (translatorische Beschleunigung am Ort des Wägesensors 3) bzw. durch eine Differenzbildung der jeweils gewichteten Störgrößensignale erfolgen. Durch die Verwendung einer jeweils adaptiven Filtereinheit 15a in den Kompensationszweigen kann jedoch auf die Gewichtung vor entsprechenden Additionseinheiten 19, 21 verzichtet werden. Stattdessen kann durch die Ermittlung der am Ort des Wägesensors 3 wirkenden Störgrößensignale durch eine unmittelbare Verknüpfung, beispielsweise Addition oder Subtraktion der tatsächlich erfassten und digitalisierten Störgrößensignale (ohne Gewichtung mit einem entsprechenden die Ortsabhängigkeit berücksichtigenden Faktor) vorgenommen werden, wobei die Ortsabhängigkeit durch eine entsprechende Festlegung der Filterparameter (einschließlich von Parametern von jeweils einer digitalen Verstärkereinheit in jedem Kompensationssignalzweig) berücksichtigt wird.

Bei der Ausführungsform in Fig. 3 wird davon ausgegangen, dass die Beschleunigungssensoren 9 baugleich sind bzw. ein ausreichend gleiches Verhalten in Bezug auf die zu erfassende Störgröße aufweisen. Damit kann auf die Kompensation unterschiedlicher Anteile des Frequenzgangs der Beschleunigungssensoren 9 verzichtet werden. Hierzu müsste erforderlichenfalls unmittelbar nach der Digitalisierung der analogen Sensorsignale ein weiteres, ggf. adaptives digitales Filter vorgesehen werden, bevor eine Verknüpfung der digitalisierten Sensorsignale erfolgt.

## Patentansprüche

1. Einrichtung zur Erschütterungskompensation des Gewichtssignals eines Wägesensors,
(a) mit einem Wägesignalzweig, welcher eine Analog-/Digitalwandlereinheit (5) umfasst, welcher das analoge Wägesignal (uₘₑₛₛ(t)) eines Wägesensors (3) zuführbar ist und welche ein digitales Wägesignal (uₘₑₛₛ(tᵢ)) erzeugt, welches diskrete Abtastwerte des abgetasteten analogen Wägesignals (uₘₑₛₛ(t)) des Wägesensors (3) beinhaltet,
(b) mit wenigstens einem Kompensationssignalzweig,
(i) der jeweils eine Analog-/Digitalwandlereinheit (11) aufweist, welcher jeweils das analoge Störgrößensignal eines Beschleunigungssensors (9) zur Erfassung einer Beschleunigungsstörgröße in einer vorgegebenen translatorischen Richtung oder um eine vorgegebene rotatorische Achse zuführbar ist, welche ein digitales Störgrößensignal erzeugt, welches diskrete Abtastwerte des abgetasteten analogen Störgrößensignals (BA(t)) des Beschleunigungssensors (9) beinhaltet, und
(ii) der eine digitale Filtereinheit (15) aufweist, welcher das digitale Störgrößensignal zugeführt ist, und
(c) mit einer Additionseinheit (7) zur Addition der Signalwerte des ihr zugeführten digitalen Wägesignals(uₘₑₛₛ(tᵢ)) und der mit einem negativen Vorzeichen beaufschlagten Signalwerte der ihr zugeführten digitalen Störgrößensignale,
(d) wobei die digitale Filtereinheit (15) des wenigstens einen Kompensationssignalzweiges als adaptive digitale Filtereinheit ausgebildet ist und
(e) wobei der Filtereinheit (15) als Führungssignal das Ausgangssignal der Additionseinheit oder das gefilterte Ausgangssignal (u(tᵢ)) der Additionseinheit oder das digitale Wägesignal (uₘₑₛₛ(tᵢ)) zugeführt ist,
**dadurch gekennzeichnet,**
(f) **dass** der Frequenzgang der Filtereinheit (15) in Abhängigkeit vom Führungssignal derart an den von der auf den Wägesensor (3) wirkenden Gesamtlastkraft (F_{L}) abhängigen Frequenzgang gegenüber Störbeschleunigungen in der vorgegebenen translatorischen Richtung oder um die vorgegebene rotatorische Achse angepasst wird, dass der Frequenzgang des betreffenden Kompensationssignalzweiges einschließlich des betreffenden damit verbundenen Beschleunigungssensors im Wesentlichen identisch ist mit dem Frequenzgang des Wägesignalzweiges einschließlich des Wägesensors (3) gegenüber Störbeschleunigungen in der vorgegebenen translatorischen Richtung oder um die vorgegebene rotatorische Achse oder diesen mit einer vorgegebenen Genauigkeit annähert.

2. Einrichtung nach Anspruch 1, **dadurch gekennzeichnet, dass** die Filtereinheit (15) ein digitales Filter (15a, 15b, 15c) mit einer vorgegebenen Anzahl von Filterparametern und eine Filterparameter-Ermittlungseinheit umfasst, welcher die Führungsgröße zugeführt ist und welche abhängig von dem ihr zugeführten Führungssignal die Filterparameter der Filtereinheit (15) ermittelt und an das digitale Filter (15a, 15b, 15c) übermittelt.

3. Einrichtung nach Anspruch 2, **dadurch gekennzeichnet, dass** die Filterparameter-Ermittlungseinheit die Filterparameter aus einer oder mehreren funktionalen analytischen Abhängigkeiten aus dem Führungssignal berechnet.

4. Einrichtung nach Anspruch 2, **dadurch gekennzeichnet, dass** die Filterparameter-Ermittlungseinheit die Filterparameter aus einer oder mehreren gespeicherten Tabellen ermittelt, in welchen die Filterparameter als Parametersätze in Abhängigkeit von Werten für das Führungssignal oder in Abhängigkeit von Wertebereichen für das Führungssignal gespeichert sind.

5. Einrichtung nach einem der Ansprüche 2 bis 4, **dadurch gekennzeichnet, dass** das Ermitteln der Filterparameter abhängig von der Führungsgröße und das Zuführen der ermittelten Filterparameter an das digitale Filter (15a, 15b) als geschlossene Regelschleife realisiert ist.

6. Einrichtung nach einem der Ansprüche 2 bis 5, **dadurch gekennzeichnet, dass** das digitale Filter in wenigstens ein erstes digitales Teilfilter (15a, 15b), dessen Filterparameter in Abhängigkeit von der Führungsgröße adaptiv ermittelt werden, und in wenigstens ein zweites digitales Teilfilter (15c) aufgeteilt ist, dessen Filterparameter unabhängig von der Führungsgröße konstant sind.

7. Einrichtung nach Anspruch 6, **dadurch gekennzeichnet, dass** die Filterparameter des wenigstens einen zweiten digitalen Teilfilters (15c) in einem Kalibriervorgang abhängig von den Charakteristika des Wägezweigs ermittelt werden, die von der auf den Wägesensor wirkenden Lastkraft unabhängig sind, und dem wenigstens einen zweiten digitalen Teilfilter (15c) zuführbar sind.

8. Einrichtung nach Anspruch 6 oder 7, **dadurch gekennzeichnet, dass** die wenigstens einen zweiten digitalen Teilfilter (15c) und/oder vorgegebene zweite digitale Teilfilter (15b) eines in ein erstes digitales Teilfilter (15a) und ein zweites digitales Teilfilter (15b) aufgeteilten ersten digitalen Teilfilters (15a, 15b) von zwei oder mehr Kompensationssignalzweigen identisch ausgebildet sind.

9. Einrichtung nach Anspruch 8, **dadurch gekennzeichnet,**
(a) **dass** die Signalwerte der digitalen Ausgangssignale von vorgegebenen ersten digitalen Teilfiltern (15a, 15b) der zwei oder mehreren Kompensationssignalzweige mittels einer Additionseinheit addiert werden, und
(b) **dass** die wenigstens einen zweiten digitalen Teilfilter (15c) der zwei oder mehreren Kompensationssignalzweige zu einem einzigen zweiten digitalen Teilfilter (15c) zusammengefasst sind,
(c) wobei das Ausgangssignal der Additionseinheit dem einzigen zweiten digitalen Teilfilter (15c) zugeführt ist,
(d) so dass die zwei oder mehreren Kompensationssignalzweige jeweils den betreffenden Teilzweig bis zur Additionseinheit umfassen und jeweils den gemeinsamen Teil zwischen der Additionseinheit der Kompensationssignalzweige und der Additionseinheit (7) zur Addition der Signalwerte des digitalen Wägesignals (uₘₑₛₛ(tᵢ)) und digitalen Störgrößensignale.
oder
(e) **dass** die wenigstens einen zweiten digitalen Teilfilter (15c) der zwei oder mehreren Kompensationssignalzweige zu einem einzigen wenigstens einen zweiten digitalen Teilfilter (15c) zusammengefasst sind und dass die identisch ausgebildeten zweiten digitalen Teilfilter (15b) der ersten digitalen Teilfilter (15a, 15b) zu einem einzigen zweiten digitalen Teilfilter (15b) der ersten digitalen Teilfilter (15a, 15b) zusammengefasst sind,
(f) wobei das Ausgangssignal der Additionseinheit (19) dem einzigen zweiten digitalen Teilfilter (15b) der ersten digitalen Teilfilter (15a, 15b) zugeführt ist,
(g) so dass die zwei oder mehreren Kompensationssignalzweige jeweils den betreffenden Teilzweig bis zur Additionseinheit (19) umfassen und jeweils den gemeinsamen Teil zwischen der Additionseinheit (19) der Kompensationssignalzweige und der Additionseinheit (7) zur Addition der Signalwerte des digitalen Wägesignals (uₘₑₛₛ(tᵢ)) und digitalen Störgrößensignale.

10. Einrichtung nach einem der Ansprüche 2 bis 9, **dadurch gekennzeichnet, dass** das digitale Filter in mehrere Filter zweiter Ordnung aufgeteilt ist.

11. Einrichtung nach einem der Ansprüche 6 bis 10, **dadurch gekennzeichnet, dass** das wenigstens eine erste digitale Teilfilter (15a, 15b) und/oder das wenigstens eine zweite digitale Teilfilter (15c) jeweils als ein oder mehrere Filter zweiter Ordnung ausgebildet sind.

12. Einrichtung nach einem der vorhergehenden Ansprüche, **dadurch gekennzeichnet, dass** die Filtereinheit (15) eine digitale Verstärkereinheit umfasst, welche als digitale Multiplikationseinheit ausgebildet ist.

13. Einrichtung nach einem der Ansprüche 6 bis 11 und Anspruch 12, **dadurch gekennzeichnet, dass** die digitale Verstärkereinheit eines Kompensationssignalzweiges vom ersten digitalen Teilfilter (15a, 15b) umfasst ist.

14. Einrichtung nach Anspruch 12 oder 13, **dadurch gekennzeichnet, dass** die Filtereinheit (15) den Verstärkungsfaktor der digitalen Verstärkereinheit adaptiv in Abhängigkeit von der ihr zugeführten Führungsgröße ermittelt.

15. Einrichtung nach einem der vorhergehenden Ansprüche, **dadurch gekennzeichnet, dass** ein einziger Kompensationszweig vorgesehen ist und dass die adaptive digitale Filtereinheit (15) anstatt im Kompensationssignalzweiges im Wägezweig vorgesehen ist,
(a) wobei der Filtereinheit (15) als Führungssignal das Ausgangssignal der Additionseinheit oder das gefilterte Ausgangssignal (u(tᵢ)) der Additionseinheit (7) oder das digitale Wägesignal (uₘₑₛₛ(tᵢ)) zugeführt ist, und
(b) wobei der Frequenzgang der Filtereinheit (15) in Abhängigkeit vom Führungssignal derart an den von der auf den Wägesensor (3) wirkenden Gesamtlastkraft (F_{L}) abhängigen Frequenzgang gegenüber Störbeschleunigungen in der vorgegebenen translatorischen Richtung oder um die vorgegebene rotatorische Achse angepasst wird, dass der Frequenzgang des Wägesignalzweiges einschließlich des Beschleunigungssensors (9) im Wesentlichen identisch ist mit dem Frequenzgang des Kompensationssignalzweiges einschließlich des Wägesensors (3) gegenüber Störbeschleunigungen in der vorgegebenen translatorischen Richtung oder um die vorgegebene rotatorische Achse oder diesen mit einer vorgegebenen Genauigkeit annähert.

16. Wägeeinrichtung mit einer Einrichtung zur Erschütterungskompensation nach einem der vorhergehenden Ansprüche, wobei die Wägeeinrichtung (1) wenigstens einen Wägesensor (3) und wenigstens einen Beschleunigungssensor (9) aufweist, deren analoge Signale jeweils der Analog-/Digitalwandlereinheit (5) des Wägesignalzweigs bzw. der Analog-/Digitalwandiereinheit (11) des wenigstens einen Kompensationssignalzweigs zugeführt sind.

## Claims

1. A device for compensating for vibration of the weight signal of a weighing sensor,
(a) having a weighing-signal branch which comprises an analog/digital converter unit (5) to which the analog weighing signal (uₘₑₛₛ(t)) of a weighing sensor (3) can be fed and which generates a digital weighing signal (uₘₑₛₛ(t₁)) which contains discrete sample values of the sampled analog weighing signal (uₘₑₛₛ(t)) of the weighing sensor (3),
(b) having at least one compensation signal branch,
(i) which in each case has an analog/digital converter unit (11), to which in each case the analog disturbance variable signal of an acceleration sensor (9) can be fed for detecting an acceleration disturbance variable in a predetermined translatory direction or about a predetermined rotational axis and which generates a digital disturbance variable signal that contains discrete sample values of the sampled analog disturbance variable signal (BA(t)) of the acceleration sensor (9), and
(ii) which has a digital filter unit (15) to which the digital disturbance variable signal is fed, and
(c) having an addition unit (7) for adding the signal values of the digital weighing signal (uₘₑₛₛ(t₁)) fed to it and the signal values which pertain to the digital disturbance variable signals fed to it and to which a negative sign is applied,
(d) wherein the digital filter unit (15) of the at least one compensation signal branch is configured as an adaptive digital filter unit, and
(e) wherein as a control signal the output signal of the addition unit or the filtered output signal (u(t₁)) of the addition unit or the digital weighing signal (uₘₑₛₛ(t₁)) is fed to the filter unit (15),
**characterised in that**
(f) the frequency response of the filter unit (15) is adapted as a function of the control signal to the frequency response, dependent upon the total load force (F_{L}) acting on the weighing sensor (3), with respect to disturbance accelerations in the predetermined translatory direction or about the predetermined rotational axis in such a way that the frequency response of the relevant compensation signal branch including the relevant acceleration sensor connected therewith is substantially identical with the frequency response of the weighing signal branch including the weighing sensor (3) with respect to disturbance accelerations in the predetermined translatory direction or about the predetermined rotational axis or approximates the latter with predetermined accuracy.

2. A device according to claim 1, **characterised in that** the filter unit (15) comprises a digital filter (15a, 15b, 15c) with a predetermined number of filter parameters and a filter parameter determination unit to which the control variable is fed and which as a function of the control signal fed to it determines the filter parameters of the filter unit (15) and transmits them to the digital filter (15a, 15b, 15c).

3. A device according to claim 2, **characterised in that** the filter parameter determination unit calculates the filter parameters from one or more functional analytical dependencies from the control signal.

4. A device according to claim 2, **characterised in that** the filter parameter determination unit determines the filter parameters from one or more stored tables in which the filter parameters are stored as parameter sets as a function of values for the control signal or as a function of value ranges for the control signal.

5. A device according to one of claims 2 to 4, **characterised in that** the filter parameters are determined as a function of the control variable, and the determined filter parameters are fed to the digital filter (15a, 15b) as a closed control loop.

6. A device according to one of claims 2 to 5, **characterised in that** the digital filter is divided into at least one first digital sub-filter (15a, 15b), the filter parameters of which are adaptively determined as a function of the control variable, and into at least one second digital sub-filter (15c), the filter parameters of which are constant independently of the control variable.

7. A device according to claim 6, **characterised in that** the filter parameters of the at least one second digital sub-filter (15c) are determined in a calibration process as a function of the characteristics of the weighing branch, which are independent of the load force acting on the weighing sensor, and can be fed to the at least one second digital sub-filter (15c).

8. A device according to claim 6 or 7, **characterised in that** the at least one second digital sub-filters (15c) and/or predetermined second digital sub-filters (15b) of a first digital sub-filter (15a, 15b), divided into a first digital sub-filter (15a) and a second digital sub-filter (15b), of two or more compensation signal branches are configured so as to be identical.

9. A device according to claim 8, **characterised in that**
(a) the signal values of the digital output signals of predetermined first digital sub-filters (15a, 15b) of the two or more compensation signal branches are added by means of an addition unit, and
(b) the at least one second digital sub-filters (15c) of the two or more compensation signal branches are combined to form a single second digital sub-filter (15c),
(c) wherein the output signal of the addition unit is fed to the single second digital sub-filter (15c),
(d) so that the two or more compensation signal branches in each case comprise the relevant sub-branch up to the addition unit and in each case the common portion between the addition unit of the compensation signal branches and the addition unit (7) for adding the signal values of the digital weighing signal (uₘₑₛₛ(t₁)) and digital disturbance variable signals,
or
(e) the at least one second digital sub-filters (15c) of the two or more compensation signal branches are combined to form a single at least one second digital sub-filter (15c), and the identically configured second digital sub-filters (15b) of the first digital sub-filters (15a, 15b) are combined to form a single second digital sub-filter (15b) of the first digital sub-filters (15a, 15b),
(f) wherein the output signal of the addition unit (19) is fed to the single second digital sub-filter (15b) of the first digital sub-filters (15a, 15b),
(g) so that the two or more compensation signal branches in each case comprise the relevant sub-branch up to the addition unit (19) and in each case the common portion between the addition unit (19) of the compensation signal branches and the addition unit (7) for adding the signal values of the digital weighing signal (uₘₑₛₛ(t₁)) and digital disturbance variable signals.

10. A device according to one of claims 2 to 9, **characterised in that** the digital filter is divided into a plurality of second-order filters.

11. A device according to one of claims 6 to 10, **characterised in that** the at least one first digital sub-filter (15a, 15b) and/or the at least one second digital sub-filter (15c) are/is configured in each case as one or more second-order filters.

12. A device according to one of the preceding claims, **characterised in that** the filter unit (15) comprises a digital amplifier unit which is configured as a digital multiplication unit.

13. A device according to one of claims 6 to 11 and claim 12, **characterised in that** the digital amplifier unit of a compensation signal branch is included by the first digital sub-filter (15a, 15b).

14. A device according to claim 12 or 13, **characterised in that** the filter unit (15) determines the amplification factor of the digital amplifier unit adaptively as a function of the disturbance variable fed to it.

15. A device according to one of the preceding claims, **characterised in that** a single compensation branch is provided, and the adaptive digital filter unit (15) is provided in the weighing branch instead of in the compensation signal branch,
(a) wherein as a control signal the output signal of the addition unit or the filtered output signal (u(t₁)) of the addition unit (7) or the digital weighing signal (uₘₑₛₛ (t₁) ) is fed to the filter unit (15), and
(b) wherein the frequency response of the filter unit (15) is adapted as a function of the control signal to the frequency response, dependent upon the total load force (F_{L}) acting on the weighing sensor (3), with respect to disturbance accelerations in the predetermined translatory direction or about the predetermined rotational axis in such a way that the frequency response of the weighing signal branch including the acceleration sensor (9) is substantially identical with the frequency response of the compensation signal branch including the weighing sensor (3) with respect to disturbance accelerations in the predetermined translatory direction or about the predetermined rotational axis or approximates the latter with predetermined accuracy.

16. A weighing device having a device to compensate for vibration according to one of the preceding claims, wherein the weighing device (1) has at least one weighing sensor (3) and at least one acceleration sensor (9), the analog signals of which are in each case fed to the analog/digital converter unit (5) of the weighing signal branch or the analog/digital converter branch (11) of the at least one compensation signal branch.

## Revendications

1. Dispositif de compensation de la vibration du signal de poids d'un capteur de pesage,
(a) ayant une branche de signal de pesage qui comprend une unité de conversion analogique/numérique (5) à laquelle le signal de pesage analogique (uₘₑₛₛ(t)) d'un capteur de pesage (3) peut être amené et qui produit un signal de pesage numérique (uₘₑₛₛ(tᵢ)) qui contient des échantillons discrets du signal de pesage analogique échantillonné (uₘₑₛₛ(t)) du capteur de pesage (3),
(b) ayant au moins une branche de signal de compensation
(i) qui présente respectivement une unité de conversion analogique/numérique (11) à laquelle le signal de grandeur perturbatrice analogique d'un capteur d'accélération (9) peut être amené respectivement pour saisir une grandeur perturbatrice d'accélération dans une direction de translation prédéfinie ou autour d'un axe de rotation prédéfini et qui produit un signal de grandeur perturbatrice numérique qui contient des échantillons discrets du signal de grandeur perturbatrice analogique échantillonné (BA(t)) du capteur d'accélération (9), et
(ii) qui présente une unité de filtre numérique (15) à laquelle le signal de grandeur perturbatrice numérique est amené, et
(c) ayant une unité d'addition (7) pour additionner les valeurs de signaux du signal de pesage numérique (uₘₑₛₛ(tᵢ)) qui lui est amené et des valeurs de signaux marquées d'un préfixe négatif des signaux de grandeurs perturbatrices numériques qui lui sont amenés,
(d) dans lequel l'unité de filtre numérique (15) de l'au moins une branche de signal de compensation est réalisée comme unité de filtre numérique adaptative, et
(e) dans lequel le signal de sortie de l'unité d'addition ou le signal de sortie filtré (u(tᵢ)) de l'unité d'addition ou le signal de pesage numérique (uₘₑₛₛ(tᵢ)) est amené à l'unité de filtre (15) comme signal de guidage,
**caractérisé**
(f) **en ce que** la réponse en fréquence de l'unité de filtre (15) est adaptée en fonction du signal de guidage à la réponse en fréquence dépendante de la force de charge totale (F_{L}) s'exerçant sur le capteur de pesage (3) par rapport aux accélérations perturbatrices dans la direction de translation prédéfinie ou autour de l'axe de rotation prédéfini de telle sorte que la réponse en fréquence de la branche du signal de compensation concernée, y compris du capteur d'accélération y afférent concerné, est sensiblement identique à la réponse en fréquence de la branche du signal de pesage, y compris du capteur de pesage (3), par rapport aux accélérations perturbatrices dans la direction de translation prédéfinie ou autour de l'axe de rotation prédéfini ou s'en approche à un degré de précision prédéfini.

2. Dispositif selon la revendication 1, **caractérisé en ce que** l'unité de filtre (15) comprend un filtre numérique (15a, 15b, 15c) ayant un nombre prédéfini de paramètres de filtre et une unité de détermination de paramètres de filtre à laquelle la grandeur de guidage est amenée et qui détermine les paramètres de filtre de l'unité de filtre (15) en fonction du signal de guidage qui lui est amené et les transmet au filtre numérique (15a, 15b, 15c).

3. Dispositif selon la revendication 2, **caractérisé en ce que** l'unité de détermination des paramètres de filtre calcule les paramètres de filtre à partir d'une ou plusieurs dépendances analytiques fonctionnelles à partir du signal de guidage.

4. Dispositif selon la revendication 2, **caractérisé en ce que** l'unité de détermination des paramètres de filtre détermine les paramètres de filtre à partir d'un ou plusieurs tableaux enregistrés dans lesquels les paramètres de filtre sont enregistrés en tant que jeux de paramètres en fonction de valeurs pour le signal de guidage ou en fonction de plages de valeurs pour le signal de guidage.

5. Dispositif selon l'une des revendications 2 à 4, **caractérisé en ce que** la détermination des paramètres de filtre en fonction de la grandeur de guidage et l'amenée des paramètres de filtre déterminés au filtre numérique (15a, 15b) sont réalisées en tant que boucle de régulation fermée.

6. Dispositif selon l'une des revendications 2 à 5, **caractérisé en ce que** le filtre numérique est partagé en au moins un premier filtre partiel numérique (15a, 15b), dont les paramètres de filtre sont déterminés de façon adaptative en fonction de la grandeur de guidage, et en au moins un deuxième filtre partiel numérique (15c), dont les paramètres de filtre sont constants indépendamment de la grandeur de guidage.

7. Dispositif selon la revendication 6, **caractérisé en ce que** les paramètres de filtre de l'au moins un deuxième filtre partiel numérique (15c) sont déterminés dans une opération de calibrage en fonction des caractéristiques de la branche de pesage, qui sont indépendantes de la force de charge s'exerçant sur le capteur de pesage, et peuvent être amenées à l'au moins un deuxième filtre partiel numérique (15c).

8. Dispositif selon la revendication 6 ou 7, **caractérisé en ce que** l'au moins un deuxième filtre partiel numérique (15c) et/ou le deuxième filtre partiel numérique (15b) prédéfini d'un premier filtre partiel numérique (15a, 15b) partagé en un premier filtre partiel numérique (15a) et un deuxième filtre partiel numérique (15b) sont réalisés de façon identique par au moins deux branches de signal de compensation.

9. Dispositif selon la revendication 8, **caractérisé :**
(a) **en ce que** les valeurs de signaux des signaux de sortie numériques de premiers filtres partiels numériques (15a, 15b) prédéfinis des au moins deux branches de signal de compensation sont additionnées au moyen d'une unité d'addition, et
(b) **en ce que** les au moins un deuxièmes filtres partiels numériques (15c) des au moins deux branches de signal de compensation sont rassemblés dans un unique deuxième filtre partiel numérique (15c),
(c) le signal de sortie de l'unité d'addition étant amené à l'unique deuxième filtre partiel numérique (15c),
(d) de telle sorte que les deux branches de signal de compensation ou davantage comprennent respectivement la branche partielle concernée jusqu'à l'unité d'addition et respectivement la partie commune entre l'unité d'addition des branches de signal de compensation et l'unité d'addition (7) pour additionner les valeurs de signaux du signal de pesage numérique (uₘₑₛₛ(tᵢ)) et les signaux de grandeurs perturbatrices numériques,
ou
(e) **en ce que** les au moins un deuxièmes filtres partiels numériques (15c) des au moins deux branches de signal de compensation sont rassemblés en un unique au moins un deuxième filtre partiel numérique (15c) et en ce que les deuxièmes filtres partiels numériques (15b) réalisés de façon identique des premiers filtres partiels numériques (15a, 15b) sont rassemblés en un unique deuxième filtre partiel numérique (15b) des premiers filtres partiels numériques (15a, 15b),
(f) le signal de sortie de l'unité d'addition (19) étant amené à l'unique deuxième filtre partiel numérique (15b) des premiers filtres partiels numériques (15a, 15b),
(g) de telle sorte que les au moins deux branches de signal de compensation comprennent respectivement la branche partielle concernée jusqu'à l'unité d'addition (19) et respectivement la partie commune entre l'unité d'addition (19) des branches de signal de compensation et l'unité d'addition (7) pour additionner les valeurs de signaux du signal de pesage numérique (uₘₑₛₛ(tᵢ)) et les signaux de grandeurs perturbatrices numériques.

10. Dispositif selon l'une des revendications 2 à 9, **caractérisé en ce que** le filtre numérique est partagé en plusieurs filtres de deuxième ordre.

11. Dispositif selon l'une des revendications 6 à 10, **caractérisé en ce que** l'au moins un premier filtre partiel numérique (15a, 15b) et/ou l'au moins un deuxième filtre partiel numérique (15c) sont réalisés respectivement comme un ou plusieurs filtres de deuxième ordre.

12. Dispositif selon l'une des revendications précédentes, **caractérisé en ce que** l'unité de filtre (15) comprend une unité d'amplification numérique qui est réalisée comme unité de multiplication numérique.

13. Dispositif selon l'une des revendications 6 à 11 et la revendication 12, **caractérisé en ce que** l'unité d'amplification numérique d'une branche de signal de compensation est comprise dans le premier filtre partie numérique (15a, 15b).

14. Dispositif selon la revendication 12 ou 13, **caractérisé en ce que** l'unité de filtre (15) détermine le facteur d'amplification de l'unité d'amplification numérique de façon adaptative en fonction de la grandeur de guidage qui lui est amenée.

15. Dispositif selon l'une des revendications précédentes, **caractérisé en ce qu'**il est prévu une seule branche de compensation et **en ce que** l'unité de filtre numérique adaptative (15) n'est pas prévue dans la branche de signal de compensation, mais dans la branche de pesage,
(a) dans lequel le signal de sortie de l'unité d'addition ou le signal de sortie filtré (u(tᵢ)) de l'unité d'addition (7) ou le signal de pesage numérique (uₘₑₛₛ(tᵢ)) est amené à l'unité de filtre (15) comme signal de guidage, et
(b) dans lequel la réponse en fréquence de l'unité de filtre (15) est adaptée en fonction du signal de guidage à la réponse en fréquence dépendant de la force de charge totale (F_{L}) s'exerçant sur le capteur de pesage (3) par rapport aux accélérations perturbatrices dans la direction de translation prédéfinie ou autour de l'axe de rotation prédéfini de telle sorte que la réponse en fréquence de la branche de signal de pesage, y compris du capteur d'accélération (9), est sensiblement identique à la réponse en fréquence de la branche de signal de compensation, y compris du capteur de pesage (3) par rapport aux accélérations perturbatrices dans la direction de translation prédéfinie ou autour de l'axe de rotation prédéfini ou s'en approche à un degré de précision prédéfini.

16. Dispositif de pesage comprenant un dispositif de compensation de la vibration selon l'une des revendications précédentes, le dispositif de pesage (1) présentant au moins un capteur de pesage (3) et au moins un capteur d'accélération (9) dont les signaux analogiques sont amenés respectivement à l'unité de conversion analogique/numérique (5) de la branche de signal de pesage et à l'unité de conversion analogique/numérique (11) de l'au moins une branche de signal de compensation.
